# EUROPÄISCHE PATENTSCHRIFT

(11) **EP 3 593 442 B1**
(45) Veröffentlichungstag und Bekanntmachung des Hinweises auf die Patenterteilung: **28.10.2026**
(21) Anmeldenummer: 17710715.8
(22) Anmeldetag: 10.03.2017
(51) Int. Cl.: H02K 3/18, H02K 3/34, H02K 15/10, H02K 1/276, H02K 3/32, H02K 7/14, H02K 15/0414, H02K 15/0421

(54) **VERFAHREN ZUR HERSTELLUNG EINER ELEKTRISCHEN WICKLUNG EINER ELEKTRISCHEN MASCHINE**
METHOD FOR PRODUCING AN ELECTRIC WINDING OF AN ELECTRIC MACHINE
PROCÉDÉ DE RÉALISATION D'UN ENROULEMENT ÉLECTRIQUE D'UNE MACHINE ÉLECTRIQUE

(43) Veröffentlichungstag der Anmeldung: 15.01.2020
(73) Patentinhaber: Podack, Marcus, 18273 Güstrow (DE)
(72) Erfinder: PODACK, Marcus, 18273 Güstrow (DE)
(74) Vertreter: FDST Patentanwälte
(86) Internationale Anmeldenummer: PCT/EP2017/055736
(87) Internationale Veröffentlichungsnummer: WO 2018/162084

(56) Entgegenhaltungen:
- WO-A2-2009/135465
- DE-A1- 102010 054 595
- DE-A1- 102014 224 393
- GB-A- 1 345 873
- JP-A- 2007 295 697
- JP-A- S61 112 542
- JP-U- S5 763 456

## Beschreibung

Die Erfindung betrifft ein Verfahren zur Herstellung einer elektrischen Wicklung einer elektrischen Maschine eines Kraftfahrzeugs. Die elektrische Maschine ist insbesondere ein Bestandteil eines elektromotorischen Kältemittelverdichters. Die Erfindung betrifft ferner eine elektrische Wicklung einer elektrischen Maschine eines Kraftfahrzeugs.

Kraftfahrzeuge weisen üblicherweise eine Klimaanlage auf, mittels derer eine Temperierung eines Innenraums des Kraftfahrzeugs erfolgt. Auch werden bei mittels eines Elektromotors angetriebenen Kraftfahrzeugen die benötigten Energiespeicher, wie eine Hochvoltbatterie, gekühlt. Die Klimaanlage weist einen Kältemittelkreislauf auf, der einen Kältemittelverdichter, diesem nachgeschaltet einen Kondensator sowie diesem fluidtechnisch nachgeschaltet einen Verdampfer umfasst. Diesem ist fluidtechnisch ein weiterer Wärmetauscher nachgeschaltet, der in thermischem Kontakt mit einer Gebläseleitung, die in den Innenraum des Kraftfahrzeugs führt, oder mit etwaigen Energiezellen des Hochvoltenergiespeichers ist. Der Kältekreislauf ist mit einem Kältemittel befüllt, wie R134a, R1234yf oder CO2.

Bei Betrieb wird mittels des Kältemittelverdichters ein Druck des Kältemittels erhöht, was zu einer Temperaturerhöhung des Kältemittels führt. Dieses wird zu dem Kondensator geleitet, der in thermischem Kontakt mit einer Umgebung des Kraftfahrzeugs ist. Hierbei erfolgt eine Temperaturerniedrigung des Kältemittels, welches in dem nachgeschalteten Verdampfer wiederum auf den ursprünglichen Druck entspannt wird, weshalb die Temperatur des Kältemittels weiter verringert wird. In dem nachgeschalteten Wärmetauscher wird von dem mit dem Wärmetauscher thermisch kontaktierten Bauteil thermische Energie auf das Kältemittel übertragen, was zu einer Abkühlung des Bauteils und einer Erwärmung des Kältemittels führt. Das erwärmte Kältemittel wird zum Schließen des Kältemittelkreislaufs erneut dem Kältemittelverdichter zugeführt.

Um die Leistung des Kältemittelverdichters unabhängig von einer Drehzahl einer Verbrennungskraftmaschine des Kraftfahrzeugs einzustellen, weist dieser einen Elektromotor auf, mittels dessen ein Verdichterkopf angetrieben ist, der beispielsweise ein Scrollverdichterkopf ist. Mit anderen Worten ist der Kältemittelverdichter ein elektromotorischer Kältemittelverdichter. Der Elektromotor weist meist eine Anzahl an elektrischen Wicklungen auf, die jeweils auf einen Zahn eines Statorblechpaketes gesetzt sind. Zwischen den einzelnen Zähnen sind hierbei Nuten gebildet, die mittels der elektrischen Wicklungen somit befüllt sind. Zur Erreichung einer möglichst hohen elektrischen Leistung ist es erforderlich, dass die Nuten im Wesentlichen vollständig mittels der elektrischen Wicklungen befüllt sind.

Die elektrischen Wicklungen sind meist aus einem Kupferlackdraht gewickelt. Sofern ein vergleichsweiser dicker elektrischer Draht verwendet wird, ist eine Stromtragfähigkeit der elektrischen Wicklungen erhöht, und auch eine Erwärmung der elektrischen Wicklungen bei Betrieb ist verringert. Aufgrund des vergleichsweise dicken Drahtes sind die Nuten jedoch lediglich teilweise befüllt, was den Wirkungsgrad des Elektromotors herabsetzt. Sofern ein vergleichsweise dünner elektrischer Draht zur Erstellung der elektrischen Wicklungen verwendet wird, sind die Nuten ausreichend mit den elektrischen Wicklungen befüllt. Hierbei ist jedoch die Stromtragfähigkeit aufgrund des verringerten Querschnitts des elektrischen Drahtes verringert, und auch eine Erwärmung ist aufgrund des erhöhten elektrischen Widerstands vergrößert. Zudem ist eine elektrische Kontaktierung mit dem vergleichsweise schmalen Draht erschwert, was Herstellungskosten erhöht.

Aus WO 2009/135465 A2 ist eine Spule für eine elektrische Maschine bekannt, die mehrere Windungen aufweist, die aus einem Kupferband gefertigt sind. Die Windungen sind in Axialrichtung übereinander gestapelt.

Aus GB 1 345 873 A ist ein Stator einer elektrischen Maschine bekannt. Hierbei stehen zwischen einzelnen Windungen angeordnete Isolationsschichten radial umfangsseitig über.

Aus DE 10 2014 224 393 A1 ist eine Spule für eine elektrische Maschine bekannt, bei der Teilstücke zu Windungen gestapelt und an Kontaktstellen elektrisch miteinander verbunden sind, wobei zur Isolierung zwischen aufeinander liegenden Windungen Isolierplättchen eingelegt oder die fertige Spule als Ganzes mit Isolierlack überzogen werden kann.

Der Erfindung liegt die Aufgabe zugrunde, ein besonders geeignetes Verfahren zur Herstellung einer elektrischen Wicklung einer elektrischen Maschine eines Kraftfahrzeugs sowie eine besonders geeignete elektrischen Wicklung einer elektrischen Maschine eines Kraftfahrzeugs anzugeben, wobei insbesondere Herstellungskosten verringert und vorzugsweise ein Wirkungsgrad der elektrischen Maschine erhöht ist.

Hinsichtlich des Verfahrens wird diese Aufgabe durch die Merkmale des Anspruchs 1 und hinsichtlich der elektrischen Wicklung durch die Merkmale des Anspruchs 5 erfindungsgemäß gelöst. Vorteilhafte Weiterbildungen und Ausgestaltungen sind Gegenstand der jeweiligen Unteransprüche.

Das Verfahren dient der Herstellung einer elektrischen Wicklung einer elektrischen Maschine eines Kraftfahrzeugs. Die elektrische Wicklung ist insbesondere eine elektrische Spule und bildet geeigneterweise einen Elektromagneten oder ist ein Teil hiervon. Geeigneterweise ist die elektrische Wicklung ein Bestandteil einer Phasenwicklung. Alternativ ist die elektrische Wicklung ein Bestandteil einer Drossel. Die elektrische Maschine ist beispielsweise ein Generator. Bevorzugt jedoch ist die elektrische Maschine ein Elektromotor. Der Elektromotor ist zum Beispiel ein bürstenbehafteter Elektromotor, wie ein bürstenbehafteter Gleichstrommotor. Alternativ hierzu ist der Elektromotor ein bürstenloser Motor, beispielsweise ein bürstenloser Gleichstrommotor (BLDC). Zweckmäßigerweise ist der Elektromotor ein Synchronmotor.

Die elektrische Maschine ist geeigneterweise ein Bestandteil eines Nebenaggregats des Kraftfahrzeugs und beispielsweise eines Verstellantrieb. Bei Betrieb wird mittels des Verstellantriebs ein Verstellteil entlang eines Verstellwegs verbracht. Beispielsweise ist der Verstellantrieb ein elektromotorischer Fensterheber, eine elektromotorisch betriebene Heckklappe oder eine elektromotorisch betriebene Tür, wie eine Schiebetür. Alternativ hierzu ist der Verstellantrieb ein elektromotorisch betriebenes Schiebedach oder ein elektromotorisch betriebenes Verdeck. In einer weiteren Alternative ist das Nebenaggregat eine Pumpe, wie beispielsweise eine Schmiermittelpumpe. Insbesondere ist das Nebenaggregat eine Ölpumpe, beispielsweise eine Motoröl- oder eine Getriebeölpumpe. Zweckmäßigerweise ist das Nebenaggregat eine elektromotorische Lenkunterstützung oder eine ABS- oder ESP-Einheit. In einer weiteren Alternative ist das Nebenaggregat eine elektromotorische Parkbremse oder eine sonstige elektrische Bremse. Zum Beispiel ist das Nebenaggregat ein Bestandteil eines Fahrzeugsitzes und dient beispielsweise der Verstellung des Sitzes oder eines Teils des Sitzes, wie einer Lehne oder einer Kopfstütze.

Besonders bevorzugt ist die elektrische Maschine ein Bestandteil eines elektromotorischen Kältemittelverdichters. Vorzugsweise ist der elektromotorische Kältemittelverdichter mit einem Bordnetz des Kraftfahrzeugs elektrisch kontaktiert und/oder mit einer elektrischen Spannung von wenigen Volt bis zu 1000V betrieben, insbesondere mit einer elektrischen Spannung von 12V, 24V, 48V, 288V, 450V, 650V oder 830V. Mittels des elektromotorischen Kältemittelverdichters wird bei Betrieb ein Kältemittel komprimiert. Das Kältemittel ist beispielsweise ein chemisches Kältemittel, wie R134a oder R1234yf. Alternativ ist das Kältemittel CO2. Vorzugsweise ist der Kältemittelverdichter derart ausgelegt, dass mittels dessen das jeweilige Kältemittel komprimiert werden kann, wobei beispielsweise eine Druckerhöhung zwischen 5bar und 20bar erfolgt. Insbesondere umfasst der elektromotorische Kältemittelverdichter einen Verdichterkopf, beispielsweise einen Scroll-Verdichter.

Der Kältemittelverdichter ist insbesondere ein Bestandteil eines Kältemittelkreislaufs (Kältekreislauf), der beispielsweise der Klimatisierung eines Innenraums oder der Abkühlung eines Energiespeichers des Kraftfahrzeugs dient, wie einer Hochvoltbatterie. Der Kältemittelkreislauf umfasst ferner insbesondere einen (Klima-)Kondensator, und einen Verdampfer. Der Kondensator ist fluidtechnisch zwischen den elektromotorischen Kältemittelverdichter und den Verdampfer geschaltet. Vorzugsweise umfasst der Kältemittelkreislauf einen weiteren Wärmetauscher, der zwischen den Verdampfer und den elektromotorischen Kältemittelverdichter geschaltet ist, und der vorzugsweise thermisch mit einem weiteren Bauteil des Kraftfahrzeugs kontaktiert ist, wie einer Gebläseleitung einer Klimaanlage oder einem Energiespeicher, wie einem Hochvoltenergiespeicher. Der Kältemittelkreislauf ist insbesondere mit einem Kältemittel befüllt, beispielsweise einem chemischen Kältemittel, wie R134a, R1234yf, oder mit CO2.

Mittels des elektromotorischen Kältemittelverdichters wird bei Betrieb ein Druck des Kältemittels erhöht, welches im Anschluss zu dem Kondensator geleitet wird, der vorzugsweise in thermischem Kontakt mit einer Umgebung des Kraftfahrzeugs ist. Geeigneterweise erfolgt mittels des Kondensators eine Temperaturangleichung des Kältemittels an die Umgebungstemperatur oder zumindest eine Temperaturerniedrigung des Kältemittels. Mit dem nachgeschalteten Verdampfer wird das Kältemittel entspannt, weshalb die Temperatur des Kältemittels weiter verringert wird. In dem nachgeschalteten weiteren Wärmetauscher wird von dem mit dem weiteren Wärmetauscher thermisch kontaktierten Bauteil thermische Energie auf das Kältemittel übertragen, was zu einer Abkühlung des Bauteils und einer Erwärmung des Kältemittels führt. Das erwärmte Kältemittel wird zum Schließen des Kältemittelkreislaufs vorzugsweise erneut dem Kältemittelverdichter zugeführt.

Das Verfahren zur Herstellung der elektrischen Wicklung sieht vor, dass eine erste und eine zweite Windung bereitgestellt werden. Die erste und zweite Windung sind hierbei mittels eines elektrischen Leiters gebildet, der im Wesentlichen in einer Ebene angeordnet ist. Hierbei überdecken sich einzelne Teile der jeweiligen Windung bei einer Projektion auf eine Ebene senkrecht zu der Anordnungsebene vorzugsweise nicht. Mit anderen Worten sind die Windungen im Wesentlichen zweidimensionale Objekte, wobei die Windungen eine bestimmte Dicke aufweisen. Die erste und die zweite Windung werden in eine Axialrichtung übereinander gestapelt, wobei die Axialrichtung zweckmäßigerweise senkrecht zur Anordnungsebene der beiden Windungen ist. Die Axialrichtung bezeichnet reeine Richtung, die parallel zu einer Achse der elektrischen Wicklung ist, die zweckmäßigerweise im Wesentlichen hohlzylindrisch ausgestaltet ist. Die Axialrichtung der elektrischen Spule, im Weiteren stets lediglich als Axialrichtung bezeichnet, ist insbesondere parallel zu einer Radialrichtung der elektrischen Maschine. Insbesondere werden die beiden Windungen im Wesentlichen deckungsgleich übereinander geordnet. Zumindest jedoch fluchten die Innen- oder Außenkanten der beiden Windungen miteinander.

Die erste und die zweite Windung werden unter Ausbildung einer ersten Kontaktstelle miteinander elektrisch kontaktiert. Hierbei werden die erste und die zweite Windung zweckmäßigerweise direkt miteinander elektrisch kontaktiert. Mit anderen Worten befinden sich zwischen der ersten und der zweiten Windung keine weiteren Bauelemente. Die elektrische Kontaktierung erfolgt stoffschlüssig mittels eines Kontaktmaterials, wobei die Kontaktstelle insbesondere ein Lot umfasst. Vorzugsweise sind die erste und die zweite Windung mittels des Kontaktmaterials, insbesondere des Lots, miteinander direkt elektrisch kontaktiert. Mit anderen Worten befindet sich mit Ausnahme des Kontaktmaterials kein weiteres Material zwischen der ersten und der zweiten Windung im Bereich der ersten Kontaktstelle. Das Kontaktmaterial weist eine Schmelztemperatur auf, die kleiner als die Schmelztemperatur der ersten Windung und kleiner als die der zweiten Windung ist. Beispielsweise ist die Schmelztemperatur der ersten Windung gleich der Schmelztemperatur der zweiten Windung. Geeigneterweise ist die Schmelztemperatur des Kontaktmaterials kleiner oder gleich als 20%, 30%, 40%, 50%, 60% oder 70% der Schmelztemperatur der ersten/zweiten Windung. Beispielsweise ist die Schmelztemperatur der ersten/zweiten Windung größer als 900°C, 1.000°C oder 1.100°C und ist insbesondere im Wesentlichen gleich 1.200°C. Geeigneterweise ist die die Schmelztemperatur des Kontaktmaterials kleiner als 900°C, 800°C oder 700°C und beispielsweise im Wesentlichen gleich 600°C.

In einem weiteren Arbeitsschritt wird eine dritte Windung, die beispielsweise baugleich zur ersten und/oder zweiten Windung ist, auf die zweite Windung in Axialrichtung gestapelt. Folglich ist die zweite Windung zwischen der dritten Windung und der ersten Windung angeordnet. Die Ausdehnungsrichtung der dritten Windung ist im Wesentlichen in einer Ebene, die insbesondere senkrecht zur Axialrichtung ist. Vorzugsweise wird die dritte Windung deckungsgleich auf die zweite Windung aufgesetzt, zumindest jedoch fluchten beispielsweise die Innen- oder Außenkanten der dritten Windung mit der zweiten Windung. Das Kontaktmaterial weist eine Schmelztemperatur auf, die kleiner als die Schmelztemperatur der dritten Windung ist. Die zweite Windung wird unter Ausbildung einer zweiten Kontaktstelle mit der dritten Windung elektrisch kontaktiert. Die Kontaktierung erfolgt ebenfalls stoffschlüssig mittels des Kontaktmaterials, und vorzugsweise ist elektrisch zwischen der zweiten Windung und der dritten Windung mit Ausnahme des Kontaktmaterials kein weiteres Bauteil vorhanden, so dass die zweite Windung elektrisch direkt mit der dritten Windung kontaktiert ist.

Insbesondere weist die fertig erstellte elektrische Wicklung eine Anzahl derartiger Windungen auf. Insbesondere ist die Gesamtanzahl derartiger Windungen zwischen drei Windungen und zwanzig Windungen, zwischen vier Windungen und fünfzehn Windungen oder zwischen fünf Windungen und zehn Windungen. Vorzugsweise sind die Windungen, also insbesondere die erste, zweite und/oder dritte Windung sogenannte Flachleiter. Zweckmäßigerweise erfolgt mittels des Kontaktmaterials auch eine mechanische Anbindung der Windungen aneinander.

Aufgrund der im Wesentlichen freien Formwählbarkeit für die einzelnen Windungen können diese entsprechend der angedachten Montageposition gefertigt werden. Insbesondere sind die Windungen auf etwaigen Nuten eines Blechpakets der elektrischen Maschine angepasst. Hierbei sind die Windungen zweckmäßigerweise derart gewählt, dass die Nuten einen vergleichsweise großen Füllgrad aufweisen. Infolgedessen ist ein Wirkungsgrad der elektrischen Maschine erhöht. Auch können die Windungen vergleichsweise robust gefertigt werden, so dass diese auch für die Anwendungen in einem Hochstromfall (größer 100A) eingesetzt werden können. Zudem ist es ermöglicht, eine vergleichsweise große elektrische Kontaktstelle der elektrischen Wicklung mittels der Windungen bereitzustellen, so dass eine elektrische Kontaktierung der elektrischen Wicklung vereinfacht ist, was Herstellungskosten reduziert.

Beispielsweise ist die erste Windung im Wesentlichen baugleich zur zweiten Windung und/oder baugleich zur dritten Windung. Besonders bevorzugt ist die zweite Windung im Wesentlichen baugleich zur dritten Windung. Alternativ hierzu nehmen die Außenabmessungen der Windungen zumindest in einer Richtung senkrecht zur Axialrichtung sukzessive zu. Folglich ist die elektrische Wicklung konisch oder keilförmig ausgestaltet. Mit anderen Worten weist die elektrische Wicklung einen trapezförmigen Querschnitt parallel zur Axialrichtung auf. Auf diese Weise ist ein Füllgrad der Nuten des etwaigen Blechpakets weiter vergrößert.

Die erste Windung, die zweite Windung und die dritte Windung werden aus einer elektrisch unisolierten Metallplatte erstellt. Somit ist auch die erste, zweite und dritte Windung elektrisch unisoliert. Infolgedessen ist eine Erstellung der ersten bzw. zweiten Kontaktstelle vereinfacht, da nicht zunächst eine etwaige elektrische Isolierung in diesem Bereich aufgebrochen werden muss. Beispielsweise ist die Metallplatte aus einem Aluminium, also reinem Aluminium oder einer Aluminiumlegierung, oder einem Kupfer erstellt, insbesondere reinem Kupfer oder einer Kupferlegierung. Zweckmäßigerweise ist die Metallplatte im Wesentlichen plan, sodass auch die erste, zweite bzw. dritte Windung im Wesentlichen plan ist, was eine Erstellung der elektrischen Wicklung vereinfacht. Geeigneterweise ist die Metallplatte zwischen 1mm und 5mm dick und zweckmäßigerweise zwischen 2mm und 4mm dick. Vorzugsweise ist die Metallplatte im Wesentlichen 3mm dick. Auf diese Weise weisen die Windungen eine vergleichsweise große Dicke und somit eine vergleichsweise hohe Stromtragfähigkeit auf. Beispielsweise werden die Windungen aus der Metallplatte gefräst. Geeigneterweise werden die Windungen jedoch aus der Metallplatte gestanzt, was Herstellungskosten weiter verringert.

Beispielsweise werden die elektrisch miteinander kontaktierten Windungen in einer Richtung senkrecht zur Axialrichtung gebogen. Mit anderen Worten verläuft die Biegeachse senkrecht zur Axialrichtung. Infolgedessen weist die elektrische Wicklung im Querschnitt parallel zur Axialrichtung einen im Wesentlichen V-förmigen (dachförmigen) oder bogenförmigen Querschnitt auf. Auf diese Weise kann die elektrische Wicklung auch bei einem Blechpaket mit einer vergleichsweise geringen Anzahl an Zähnen angebunden werden, ohne dass aufgrund der Sehnung ein Innendurchmesser beschränkt wird. Geeigneterweise erfolgt die Biegung erst im Anschluss an die elektrische Kontaktierung der einzelnen Windungen, weswegen die Erstellung der jeweiligen Kontaktstellen aufgrund der Biegung nicht behindert werden.

Zwischen die erste Windung und die zweite Windung wird eine erste Isolationsschicht eingebracht. Die erste Isolationsschicht weist vorzugsweise einen vergleichsweise großen elektrischen Widerstand auf und ist insbesondere ein elektrischer Isolator. Mittels der ersten Isolationsschicht wird die erste Windung von der zweiten Windung elektrisch isoliert, sodass diese lediglich im Bereich der ersten Kontaktstelle miteinander elektrisch kontaktiert sind. Auf diese Weise ist ein ungewollter Kurzschluss zwischen den beiden Windungen vermieden, insbesondere sofern die beiden Windungen aus einem elektrisch unisolierten Material erstellt werden.

Zwischen der dritten Windung und der zweiten Windung wird eine zweite Isolationsschicht eingebracht, mittels derer die zweite Windung von der dritten Windung mit Ausnahme der zweiten Kontaktstelle elektrisch isoliert wird. Beispielweise ist die erste Isolationsschicht baugleich zur zweiten Isolationsschicht. Insbesondere ist die erste Isolationsschicht mechanisch von der zweiten Isolationsschicht getrennt. In einer Alternative hierzu sind die beiden Isolationsschichten einstückig. Zweckmäßigerweise weisen die Isolationsschichten im Bereich der jeweiligen zugeordneten Kontaktstelle eine Aussparung auf, sodass ein Stromfluss durch die elektrische Windung ermöglicht ist. Die Isolationsschichten werden zwischen die Windungen nach Erstellung der elektrischen Kontaktierung eingebracht, was die Handhabung der Windungen zwischen beiden Elektronen vereinfacht.

Erfindungsgemäß werden die Isolationsschichten an zumindest einer der jeweils zugeordneten Windungen befestigt mittels Kleben, was eine Robustheit der elektrischen Wicklung weiter erhöht. Zur Einbringung der Isolationsschichten werden zweckmäßigerweise die jeweiligen Windungen mechanisch auseinandergezogen, zumindest partiell.

Die Isolationsschichten (Isolierschicht) sind beispielsweise mittels Stanzen oder mittels eines Schneidplotters erstellt. Insbesondere sind die Isolationsschichten aus einem Isolationspapier oder einem Aramidfasergewebe gefertigt. Auf diese Weise ist eine vergleichsweise effiziente elektrische Isolierung der Windungen gegeben. Insbesondere werden die Isolationsschichten zum Toleranzausgleich herangezogen, sodass auch bei einer vergleichsweise ausgeprägten ersten bzw. zweiten Kontaktstelle, bei der die jeweiligen Windungen vergleichsweise weit zueinander beabstandet sind, eine Bewegung von Bestandteilen der Windungen zueinander mittels der jeweiligen Isolationsschicht unterbunden ist.

Erfindungsgemäß wird die erste Isolationsschicht derart gewählt, dass diese in einer Radialrichtung, also senkrecht zur Axialrichtung über die erste Windung und die zweite Windung übersteht. Die Radialrichtung bezeichnet die radiale Richtung der elektrischen Wicklung. Beispielweise steht die erste Isolationsschicht auf der radialen Innenseite der beiden Windungen über. Sofern die elektrische Wicklung zur Montage auf einen Zahn eines etwaigen Blechpakets aufgesetzt wird, wird die Isolationsschicht bei diesem Prozess teilweise verformt, insbesondere umgebogen, sodass mittels der Isolationsschicht ein Toleranzausgleich zwischen den Windungen und dem Zahn erstellt wird. Auch wird der Zahn mittels der ersten Isolationsschicht elektrisch gegenüber der ersten bzw. zweiten Windung isoliert, weswegen ein elektrischer Kurzschluss vermieden ist. Alternativ oder in Kombination hierzu steht die erste Isolationsschicht an der radialen Außenseite über die erste bzw. zweite Windung über. Auf diese Weise ist ein Ansatzpunkt für ein etwaiges Werkzeug zur Montage der elektrischen Wicklung auf dem Zahn des etwaigen Blechpakets gegeben. Somit ist ein Angreifen des Werkzeugs an den Windungen der elektrischen Spule selbst nicht erforderlich, weswegen diese nicht beschädigt werden. Erfindungsgemäß steht die zweite Isolationsschicht über die zweite und die dritte Windung in der Radialrichtung über. Hierbei steht die zweite Isolationsschicht entweder auf der radialen Innenseite, auf der radialen Außenseite oder besonders bevorzugt beidseitig in Radialrichtung über die zweite und die dritte Windung über, sodass einerseits eine Montage vereinfacht und andererseits ein Toleranzausgleich sowie eine elektrische Isolierung im Montagezustand gewährleistet ist. Sofern die elektrische Wicklung eine Anzahl an Windungen aufweist, die größer als drei ist, wird vorzugsweise jeweils zwischen benachbarte Windungen jeweils eine Isolationsschicht angeordnet. Insbesondere wird aufgrund des Überstehens an der radialen Außenseite eine Kriechstrecke eingehalten und/oder etwaige Kanten der Windungen geschützt, sodass die Isolationsschicht einen Kantenschutz für die Windungen darstellen. Vorzugsweise ist der Überstand der Isolationsschicht nicht konstant. Beispielsweise ist der Überstand zwischen 0,1mm und 0,8mm, zwischen 0,3mm und 0,6mm und insbesondere gleich 0,5mm.

Erfindungsgemäß werden die elektrisch miteinander kontaktierten Windungen mittels einer Beschichtung versehen. Die Beschichtung dient der elektrischen Isolierung. Geeigneterweise wird eine Tauchbeschichtung (Tauchlackierung) herangezogen. Insbesondere werden zunächst sämtliche Windungen der elektrischen Wicklung miteinander elektrisch kontaktiert. Nach Abschluss der elektrischen Kontaktierung und dem Einbringen etwaiger Isolationsschichten wird das auf diese Weise erstellte Paket mittels der Beschichtung versehen. Auf diese Weise wird die Erstellung der stoffschlüssigen Verbindung aufgrund der Beschichtung nicht behindert. Beispielsweise wird lediglich ein bestimmter Abschnitt der Windungen mit der Beschichtung versehen. Mit anderen Worten werden die Windungen lediglich partiell beschichtet. Besonders bevorzugt jedoch werden sämtliche Windungen vollständig mit der Beschichtung versehen, was einen elektrischen Kurzschluss bei Betrieb der elektrischen Wicklung im Wesentlichen vollständig vermeidet. Auch ist es mittels der Beschichtung ermöglicht, eine Korrosion der elektrischen Wicklung zu vermeiden, falls diese in einer aggressiven Umgebung eingesetzt wird, wie dies aufgrund eines etwaigen Kühlmittels innerhalb eines elektromotorischen Kältemittelverdichters der Fall ist. Die Beschichtung ist beispielsweise ein Kunststoff und insbesondere ein Lack, was Herstellungskosten reduziert. Vorzugsweise sind die Kanten der Windungen gebrochen, was insbesondere ein verbessertes Haften der Beschichtung gewährleistet. Alternativ oder in Kombination hierzu sind die Ecken der Windungen abgerundet oder spitz zulaufend. Die Form der Ecken ist geeigneterweise auf die geforderte elektromagnetische Verträglichkeit (EMV) abgestimmt.

Beispielsweise erfolgt die elektrische Kontaktierung mittels Laser- oder Elektronenstrahlschweißens. Bevorzugt erfolgt die elektrische Kontaktierung mittels Widerstandshartlöten erfolgt. Mit anderen Worten wird die stoffschlüssige elektrische Kontaktierung mittels Widerstandshartlötens erstellt. Zusammenfassend erfolgt die elektrische Kontaktierung mittels Widerstandshartlötens, wobei die Kontaktstelle insbesondere das Lot umfasst. Vorzugsweise sind die erste und die zweite Windung mittels des Lots miteinander direkt elektrisch kontaktiert. Mit anderen Worten befindet sich mit Ausnahme des Lots kein weiteres Material zwischen der ersten und der zweiten Windung im Bereich der ersten Kontaktstelle. Geeigneterweise ist die zweite Kontaktstelle entsprechend ausgestaltet. Geeigneterweise wird zur Herstellung der ersten Kontaktstelle die erste Windung mit einer ersten Elektrode und die zweite Windung mit einer zweiten Elektrode elektrisch kontaktiert. Vorzugsweise wird zur Erstellung der zweiten Kontaktstelle die erste Windung mit der ersten Elektrode und die dritte Windung mit der zweiten Elektrode elektrisch kontaktiert.

Zur Herstellung der ersten Kontaktstelle sind die erste Windung beispielsweise elektrisch mit einer ersten Elektrode und die zweite Windung mit einer zweiten Elektrode elektrisch kontaktiert. Zur Herstellung der ersten Kontaktstelle wird eine elektrische Spannung zwischen den beiden Elektroden angelegt, so dass ein elektrischer Stromfluss über die beiden Windungen durch die erste Kontaktstelle erfolgt, an der vorzugsweise das vorhandene Kontaktmaterial aufgeschmolzen wird. Die Bestromung wird unterbrochen und die erste Kontaktstelle abgekühlt, so dass das Kontaktmaterial erneut in einen festen Zustand übergeht. Beispielsweise ist die erste Elektrode direkt mit der ersten Windung elektrisch kontaktiert, wofür beispielsweise die erste Elektrode mechanisch direkt an der ersten Windung anliegt. Vorzugsweise ist die zweite Elektrode direkt mit der zweiten Windung kontaktiert, und die zweite Elektrode liegt zum Beispiel mechanisch direkt an der zweiten Windung an. Zur Herstellung der stoffschlüssigen Verbindung zwischen der zweiten und dritten Windung werden hierbei die erste Windung mit der ersten Elektrode und die dritte Windung mit der zweiten Elektrode elektrisch kontaktiert, wobei die Elektroden vorzugsweise mechanisch direkt an der jeweiligen Windung anliegen. Zweckmäßigerweise ist mit der dritten Windung die gleiche zweite Elektrode elektrisch kontaktiert, die in dem vorherigen Arbeitsschritt mit der zweiten Windung elektrisch kontaktiert war.

Mit den beiden Elektroden werden lediglich die jeweils äußersten Windungen der zu erstellenden elektrischen Wicklung kontaktiert, so dass ein Wärmeeintrag lediglich auf diese Windungen erfolgt, weswegen die erste Kontaktstelle nicht weiter belastet wird. Zweckmäßigerweise wird im Anschluss hieran eine weitere Windung auf die dritte Windung aufgesetzt und ebenfalls mit dieser stoffschlüssig mittels des Kontaktmaterial elektrisch kontaktiert, wobei hierbei ebenfalls die beiden Elektroden jeweils lediglich mit den beiden äußersten Windungen elektrisch kontaktiert sind. Zweckmäßigerweise wird zur Erstellung der elektrischen Wicklung eine Anzahl derartiger Windungen herangezogen, wobei die Windungen jeweils mit den direkt benachbarten Windungen stoffschlüssig mittels des Kontaktmaterials elektrisch kontaktiert werden, und wobei zur Erstellung jeweils die äußersten Windungen des auf diese Weise erstellten Stapels an Windungen mit den Elektronen elektrisch kontaktiert werden.

Die Erfindung betrifft ferner ein Verfahren zur Herstellung einer elektrischen Maschine, bei der die elektrische Windung insbesondere an einem Zahn eines Blechpakets der elektrischen Maschine angebunden wird, insbesondere befestigt.

Die elektrische Wicklung ist Bestandteil einer elektrischen Maschine eines Kraftfahrzeugs. Die elektrische Maschine ist beispielsweise ein Generator oder besonders bevorzugt ein Elektromotor. Der Elektromotor ist insbesondere eine Synchronmaschine und beispielsweise ein bürstenbehafteter Elektromotor, wie ein bürstenbehafteter Gleichstrommotor. Besonders bevorzugt ist der Elektromotor ein bürstenloser Gleichstrommotor (BLDC). Die elektrische Maschine ist besonders bevorzugt ein Bestandteil eines elektromotorischen Kältemittelverdichters, mittels dessen bei Betrieb ein Kältemittel verdichtet wird. In einer Alternative hierzu ist der Elektromotor ein Bestandteil eines Verstellantriebs des Kraftfahrzeugs, wie einer elektromotorischen Sitzverstellung, eines elektromotorischen Fensterhebers oder einer elektromotorischen betätigten Heckklappe oder Tür. In einer weiteren Alternative ist der Elektromotor ein Bestandteil einer Pumpe, wie einer Öl- oder Wasserpumpe. Im Montagezustand ist die elektrische Windung besonders bevorzugt an einem Blechpaket der elektrischen Maschine montiert, welches beispielsweise ein Statorblechpaket oder ein Rotorblechpaket ist. Hierbei ist die elektrische Windung vorzugsweise auf einen Zahn des Blechpakets aufgesetzt.

Geeigneterweise umfasst die elektrische Maschine eine Anzahl derartiger elektrischer Wicklungen. Beispielsweise ist die Anzahl der elektrischen Wicklungen zwischen vier Wicklungen und fünfzig Wicklungen, zwischen sechs Wicklungen und vierzig Wicklungen, zwischen acht Wicklungen und sechsundreißig Wicklungen und beispielsweise gleich zwölf Wicklungen. Insbesondere ist jeder elektrischen Wicklung ein Zahn des etwaigen Blechpakets zugeordnet, wobei die einzelnen Zähne jeweils mittels einer Nut zueinander bestandet sind. Vorzugsweise wird die elektrische Maschine mit 48V betrieben. Beispielsweise weist die elektrische Wicklung eine Länge in eine Ausdehnungsrichtung, die senkrecht zu einer Axialrichtung der elektrischen Spule ist, zwischen 20mm und 50mm, vorzugsweise zwischen 33mm und 44mm auf.

Die elektrische Spule weist eine erste, eine zweite und eine dritte Wicklung auf, die insbesondere jeweils Flachleiter sind. Hierbei ist die erste Windung elektrisch mit der zweiten Windung und die zweite Windung elektrisch mit der dritten Windung elektrisch kontaktiert, beispielsweise direkt, und insbesondere ist die zweite Windung in Axialrichtung zwischen der ersten Windung und der dritten Windung angeordnet. Die drei Windungen sind somit in Axialrichtung übereinander gestapelt und vorzugsweise ist die Anordnungsrichtung der Windungen senkrecht zur Axialrichtung. Die Windungen selbst sind mittels stoffschlüssig mittels eines Kontaktmaterials miteinander elektrisch kontaktiert, wobei zwischen der ersten und der zweiten Windung eine erste Kontaktstelle und zwischen der zweiten und dritten Windung eine zweite Kontaktstelle ausgebildet ist.

Zur elektrischen Kontaktierung wird hierbei vorzugsweise zunächst die erste Windung elektrisch mit der zweiten Windung kontaktiert, wofür insbesondere Widerstandshartlöten verwendet wird. Sobald dies erfolgt ist, wird vorzugsweise die dritte Wicklung auf die zweite Wicklung aufgesetzt und mit dieser stoffschlüssig mittels des Kontaktmaterials elektrisch kontaktiert. Zusammenfassend wird zunächst die erste und die zweite Windung in der Axialrichtung übereinander gestapelt und unter Ausbildung der ersten Kontaktstelle stoffschlüssig mittels des Kontaktmaterials elektrisch miteinander kontaktiert, wobei insbesondere die erste Windung mit einer ersten Elektrode und die zweite Windung mit einer zweiten Elektrode elektrisch kontaktiert ist. In einem weiteren Arbeitsschritt wird die dritte Windung in der Axialrichtung auf die zweite Windung gestapelt und unter Ausbildung einer zweiten Kontaktstelle stoffschlüssig mittels des Kontaktmaterials mit der zweiten Windung elektrisch kontaktiert, wobei geeigneterweise die erste Windung mit der ersten Elektrode und die dritte Windung mit der zweiten Elektrode elektrisch kontaktiert ist. Geeigneterweise erfolgt die elektrische Kontaktierung mittels Widerstandshartlötens. Zum Ausführen des Widerstandshartlötens wird hierbei jeweils eine elektrische Spannung zwischen der ersten Elektrode und der zweiten Elektrode angelegt. Das Kontaktmaterial weist eine Schmelztemperatur auf, die kleiner als die Schmelztemperatur der ersten, zweiten und dritten Windung ist.

Die Form der Windungen kann im Wesentlichen frei gewählt werden, weswegen ein Füllgrad von zwischen Zähnen des etwaigen Blechpakets vorhandenen Nuten mittels der elektrischen Wicklung in einem vergleichsweise großen Umfang befüllt werden können. Auf diese Weise ist ein Wirkungsgrad der elektrischen Maschine verbessert. Aufgrund des sukzessiven Anordnens des Windungen sowie eines sukzessiven elektrischen Kontaktierens sind Herstellungskosten der elektrischen Wicklung reduziert.

Beispielsweise liegen die erste Kontaktstelle und die zweite Kontaktstelle in Axialrichtung übereinander. Besonders bevorzugt jedoch sind die beiden Kontaktstellen in einer Richtung senkrecht zur Axialrichtung zueinander versetzt. Hierbei sind die beiden Kontaktstellen geeigneterweise ebenfalls in Axialrichtung zueinander versetzt. Sofern die elektrische Wicklung eine größere Anzahl an Kontaktstellen aufweist, sind diese beispielsweise stufenartig zueinander angeordnet. Auf diese Weise werden bei Erstellung der jeweiligen Kontaktstellen bereits vorhandene Kontaktstellen nicht zerstört, beispielsweise aufgrund eines erneuten Aufschmelzens des Lots der jeweiligen Kontaktstelle.

Zweckmäßigerweise ist an der ersten Windung ein Anschluss angeformt. Mit anderen Worten ist die erste Windung einstückig mit einem Anschluss. Mit dem Anschluss wird beispielsweise bei der Herstellung die erste Elektrode elektrisch kontaktiert, insbesondere liegt die erste Elektrode im Bereich des Anschlusses an, sodass die erste Windung mittels des Anschlusses mit der ersten Elektrode elektrisch kontaktiert ist. Zweckmäßigerweise bildet der Anschluss eine Kontaktiermöglichkeit der elektrischen Wicklung im Montagezustand. Insbesondere ist im Montagezustand eine Leitung mit dem Anschluss elektrisch kontaktiert, mittels derer beispielsweise eine Bestromung der elektrischen Wicklung erfolgt. Geeigneterweise umfasst die elektrische Wicklung eine weitere Windung, die ebenfalls einen Anschluss aufweist, wobei diese beiden Windungen vorzugsweise die Stirnseite der elektrischen Wicklung bilden. Sofern die elektrische Wicklung lediglich die drei Windungen aufweist, weist somit die dritte Windung den weiteren Anschluss auf. Die Anschlüsse befinden sich beispielsweise in der Radialrichtung auf der gleichen Seite oder auf gegenüberliegenden Seiten, sodass die Wicklung effektive im Wesentlichen eine halbzahlige Windungszahl aufweist.

Zweckmäßigerweise ist jede Windung ein Ring mit einem Schlitz. Der Ring ist hierbei beispielsweise rund oder O-förmig ausgestaltet. Im Montagezustand ist der Schlitz geeigneterweise direkt benachbart zu der jeweiligen Kontaktstelle, die der Windung zugeordnet ist. Auf diese Weise wird bei Betrieb ein vergleichsweise großer Anteil der jeweiligen Windung von elektrischem Strom durchflossen, weswegen ein Wirkungsgrad der elektrischen Maschine erhöht ist. Auch weist auf diese Weise die elektrische Spule mit Ausnahme des Schlitzes eine im Wesentlichen plane Stirnseite auf, was eine Montage erleichtert und Beschädigungen vermeidet. Hierbei ist beispielsweise an der ersten Windung der Anschluss angeformt, so dass zwar ein bestimmter Bereich der ersten Windung, nämlich von dem Anschluss zu der Seite des Schlitzes, die nicht über die erste Kontaktstelle mit der zweiten Windung elektrisch kontaktiert ist, bei Betrieb nicht von dem elektrischen Strom durchflossen wird. Jedoch ist die Stirnseite der elektrischen Wicklung im Wesentlichen plan und die elektrische Wicklung weist eine im Wesentlichen konstante Gewichtsverteilung auf, weswegen eine Unwucht vermieden ist, sofern die elektrische Wicklung im Montagezustand an einem rotierenden Bestandteil der elektrischen Maschine angebunden ist .

Die Erfindung betrifft ferner eine elektrische Maschine mit einer derartigen elektrischen Wicklung, insbesondere einer Anzahl derartiger elektrischer Wicklungen.

Die im Zusammenhang mit dem Verfahren beschriebenen Weiterbildungen und Vorteile sind sinngemäß auch auf die elektrische Wicklung zu übertragen und umgekehrt.

Nachfolgend wird die Erfindung anhand einer Zeichnung näher erläutert. Darin zeigen:
- Fig. 1: schematisch ein Kraftfahrzeug mit einem elektromotorischen Kältemittelverdichter,
- Fig. 2: in einer Schnittdarstellung schematisch vereinfacht den elektromotorischen Kältemittelverdichter,
- Fig. 3: perspektivisch einen Stator des elektromotorischen Kältemittelverdichter, mit einer Anzahl an elektrischen Wicklungen,
- Fig. 4 bis 6: perspektivisch eine der elektrischen Wicklungen,
- Fig. 7: ein Verfahren zur Herstellung der elektrischen Wicklung,
- Fig. 8, 9: die elektrische Wicklung zu unterschiedlichen Herstellungszeitpunkten,
- Fig. 10: perspektivisch eine weitere Ausführungsform des Stators,
- Fig. 11: perspektivisch eine weitere Ausführungsform der elektrischen Wicklung,
- Fig. 12: schematisch die Montage der elektrischen Wicklung, und
- Fig. 13: die montierte elektrische Wicklung.

Einander entsprechende Teile sind in allen Figuren mit den gleichen Bezugszeichen versehen.

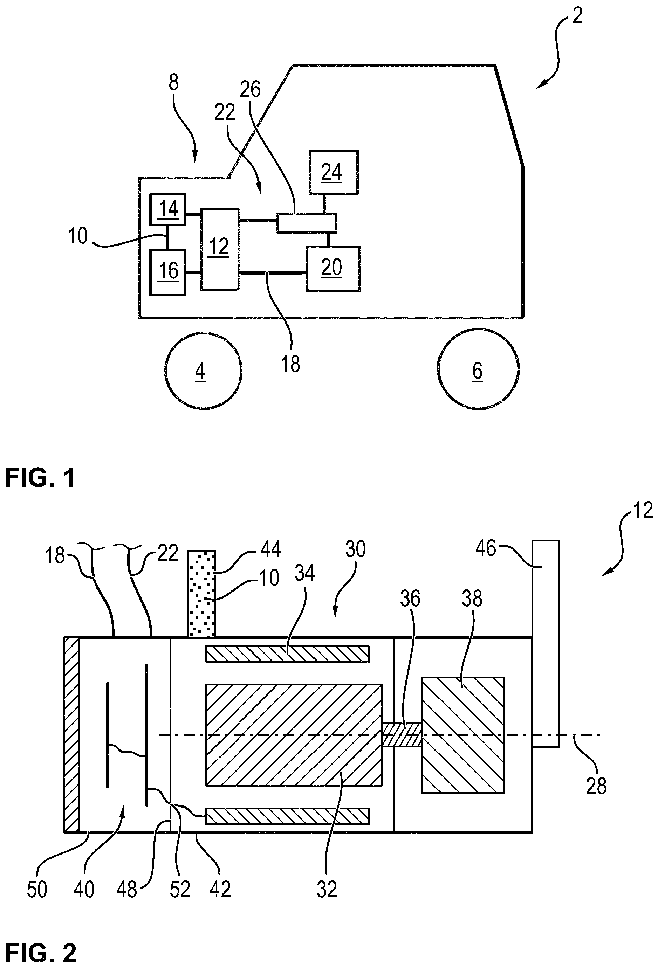

In Fig. 1 ist schematisch vereinfacht ein Kraftfahrzeug 2 mit zwei Vorderrädern 4 und zwei Hinterrädern 6 dargestellt. Zumindest zwei der Räder 4, 6 sind mittels eines nicht näher gezeigten Hauptantriebs angetrieben, beispielsweise einer Verbrennungskraftmaschine, einem Elektromotor oder einer Kombination hieraus. Das Kraftfahrzeug 2 umfasst einen Kältemittelkreislauf 8, der ein Bestandteil einer Klimaanlage ist. Der Kältemittelkreislauf 8 ist mit einem Kältemittel 10 befüllt, beispielsweise CO2, R1234yf oder R134a. Mittels eines elektromotorischen Kältemittelverdichters (eKMV) 12 wird das Kältemittel 10 verdichtet und einem fluidtechnisch nachgeschalteten Kondensator 14 zugeführt, der mit Umgebungsluft beaufschlagt ist, was zu einer Temperaturabsenkung des Kältemittels 10 führt. Der Druck und somit die Temperatur des Kältemittel 10 wird mittels eines nachgeschalteten Verdampfers 16 erniedrigt, der einen nicht näher dargestellten weiteren Wärmtauscher umfasst, der mit einer Gebläseleitung der Klimaanlage thermisch gekoppelt ist. Die Gebläseleitung fördert in Abhängigkeit einer Benutzereinstellung gekühlte Luft in einen Innenraum des Kraftfahrzeugs 2.

Der elektromotorische Kältemittelverdichter 12 ist mittels eines Bus-Systems 18, das ein CAN-Bus-System oder ein Lin-Bus-System ist, signaltechnisch mit einer Kraftfahrzeugsteuerung 20 gekoppelt, wie einem Bordcomputer. Mittels eines Bordnetzes 22, welches die jeweilige elektrische Spannung, beispielsweise 48V, führt und mittels einer Batterie 24 gespeist ist, wird der elektromotorische Kältemittelverdichter 12 bestromt. Das Bordnetz 22 umfasst ferner eine Sicherungseinrichtung 26, mittels derer ein elektrischer Stromfluss zwischen der Batterie 24 und dem Kältemittelverdichter 12 unterbunden werden kann. Hierfür weist die Sicherungseinrichtung 26 beispielsweise einen Last- und/oder Schutzschalter auf. Die Sicherungseinrichtung 26 ist mittels des Bus-Systems 18 oder anderweitig signaltechnisch mit der Kraftfahrzeugsteuerung 20 verbunden, sodass mittels der Kraftfahrzeugsteuerung 20 der Last- bzw. Schutzschalter betätigt und somit der elektrische Stromfluss unterbunden werden kann.

Fig. 2 zeigt schematisch vereinfacht den elektromotorischen Kältemittelverdichter 12 in einer Schnittdarstellung entlang einer Drehachse 28 eines Elektromotors 30 des Kältemittelverdichters 12. Der Elektromotor 30 weist einen zylindrischen Rotor 32 auf, der umfangsseitig mittels eines hohlzylindrischen Stators 34 umgeben ist. Der Rotor 32 ist mittels einer Welle 36 drehbar um die Drehachse 28 gelagert. An der Welle 36 ist freiendseitig ein Verdichterkopf 38 drehfest angebunden, beispielsweise ein Scrollverdichter. Der Stator 34 wird mittels einer Elektronik 40 bestromt, die mit dem Bus-Systems 18 und dem Bordnetz 22 verbunden ist.

Der Elektromotor 30, der Verdichterkopf 38 und die Elektronik 40 sind in einem Gehäuse 42 aus einem Aluminiumdruckguss angeordnet, das eine im Wesentlichen hohlzylindrische Form aufweist und konzentrisch zur Drehachse 28 ist. Das Gehäuse 42 umfasst einen Zulauf 44 über den das Kältemittel 10 in das Gehäuse 42 eintritt und entlang des Elektromotors 30 zu dem Verdichterkopf 38 gesaugt wird, mittels dessen eine Druckerhöhung erfolgt. Das mittels des Verdichterkopfs 38 komprimierte Kältemittel 10 wird mittels eines Ablaufs 46 aus dem Gehäuse 34 befördert.

Das Gehäuse 42 umfasst eine Trennwand 48, mittels dessen ein Elektronikgehäuse 50 von dem von dem Kältemittel 10 durchströmten Teil des Gehäuses 42 abgetrennt ist. Innerhalb des Elektronikgehäuses 50 ist die Elektronik 40 angeordnet. Die Trennwand 48 weist eine Durchkontaktierung 52 auf, die druckdicht ist, und über die die Bestromung des Stators 34 erfolgt. Auf der der Trennwand 48 in axialer Richtung, also parallel zur Drehachse 28, gegenüberliegenden Seite umfasst das Elektronikgehäuse 50 einen aus einem Metall gefertigten Gehäusedeckel 54, der mittels Schrauben an weiteren Bestandteilen des Elektronikgehäuses 50 lösbar befestigt ist, und welcher eine Öffnung des Elektronikgehäuses 50 verschließt.

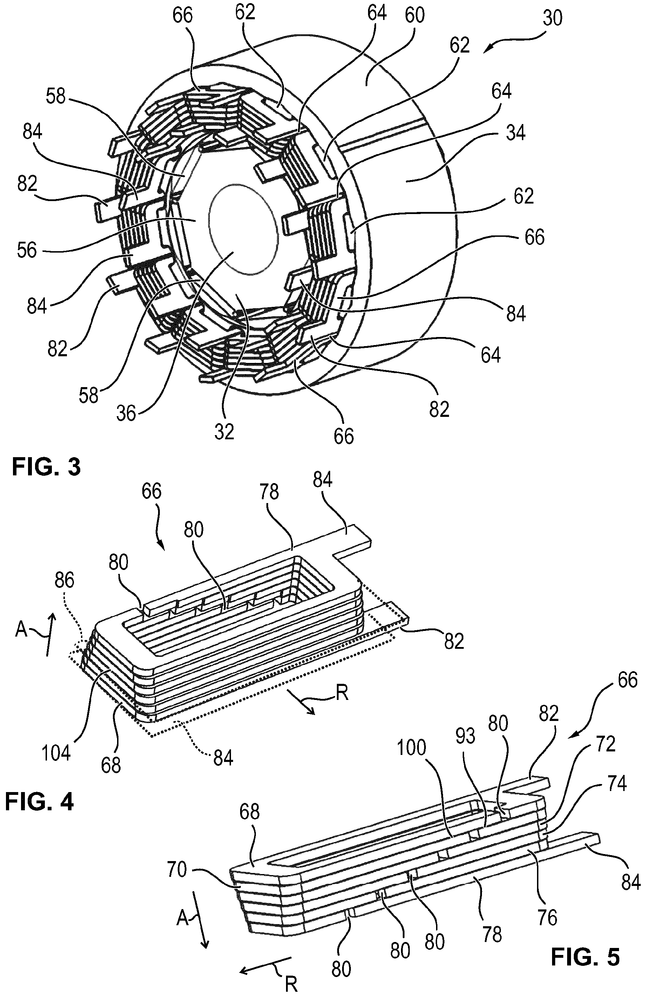

In Fig. 3 ist perspektivisch der Elektromotor 30 vereinfacht dargestellt. Der Rotor 32 weist ein Rotorblechpaket 56 auf, innerhalb dessen acht Permanentmagnete 58 angeordnet (vergraben) sind. Der Rotor 32 ist umfangsseitig von dem Stator 34 umgeben, der ein Statorblechpaket 60 mit zwölf Zähnen 62 aufweist, die auf den Rotor 32 zugerichtet sind. Zwischen jeweils benachbarten Zähnen 62 sind Nuten 64 gebildet, sodass der Stator 34 insgesamt zwölf derartige Nuten 64 aufweist.

Auf jeden Zahn 62 ist jeweils eine elektrische Wicklung 66 gesteckt, von denen eine perspektivisch in den Fig. 4 bis 6 dargestellt ist. Die elektrischen Wicklungen 66 sind zueinander baugleich. Jede elektrische Wicklung 66 weist eine erste Windung 68, eine zweite Windung 70, eine dritte Windung 72, eine vierte Windung 74, eine fünfte Windung 76 und eine sechste Windung 78 auf, die jeweils aus einer Kupferplatte gestanzt sind. Jede der Windungen 68, 70, 72, 74, 76, 78 ist plan und ein Ring mit jeweils einem Schlitz 80. Mit anderen Worten ist jede Windung 68, 70, 72, 74, 76, 78 nicht geschlossen, sondern geöffnet. An der ersten Windung 68 ist ein Anschluss 82 angeformt. An der sechsten Windung 78 ist ein weiterer Anschluss 83 angeformt, so dass jede elektrische Wicklung 66 zwei Anschlüsse 82, 84 aufweist. Im Montagezustand sind die beiden Anschlüsse 82, 84 mit der Elektronik 40 elektrisch kontaktiert. Mittels der elektrischen Wicklung 66 wird bei Betrieb ein Magnetfeld erzeugt, welches mit den Permanentmagneten 58 des Rotors 32 zusammenwirkt.

Zwischen der ersten Windung 68 und der zweiten Windung 70 ist, wie in Fig. 4 zu sehen ist, eine erste Isolationsschicht 84 angeordnet, die aus einem Isolationspapier erstellt ist. Zwischen der zweiten Windung 70 und der dritten Windung 72 ist eine zweite Isolationsschicht 86 angeordnet. Auch zwischen den weiteren Windungen 72, 74, 76, 78 sind weitere Isolationsschichten angeordnet, die jedoch nicht näher dargestellt sind. Mittels der Isolationsschichten 84, 86 sind die Windungen 68, 70, 72, 74, 76, 78 gegeneinander elektrisch isoliert.

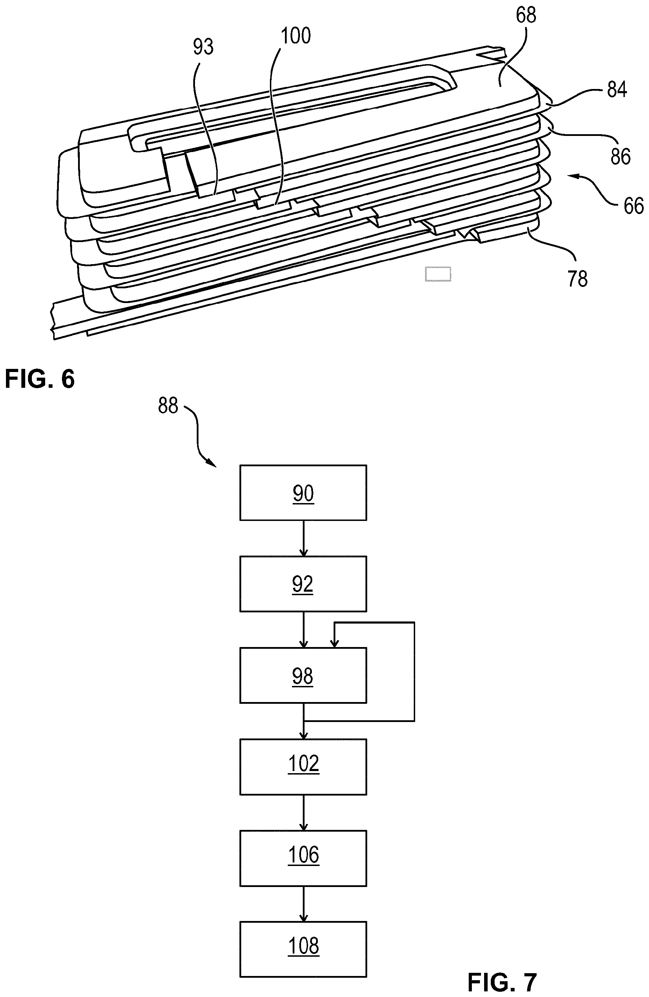

In Fig. 7 ist ein Verfahren 88 zur Herstellung der elektrischen Wicklung 66 gezeigt. In einem ersten Arbeitsschritt 90 werden die erste Windung 68, die zweite Windung 70, die dritte Windung 72 sowie die weiteren Windungen 74, 76, 78 aus einer elektrisch unisolierten Metallplatte gestanzt. Die plane Metallplatte ist 3mm dick sowie aus reinem Kupfer erstellt. Bei der ersten Windung 68 ist hierbei der Anschluss 82 bereits angeformt. Die Windungen 68, 70, 72, 74, 76, 78 weisen sukzessive eine größere Ausdehnung in einer Richtung auf, die parallel zu einer Tangentialrichtung des Stators 34 ist.

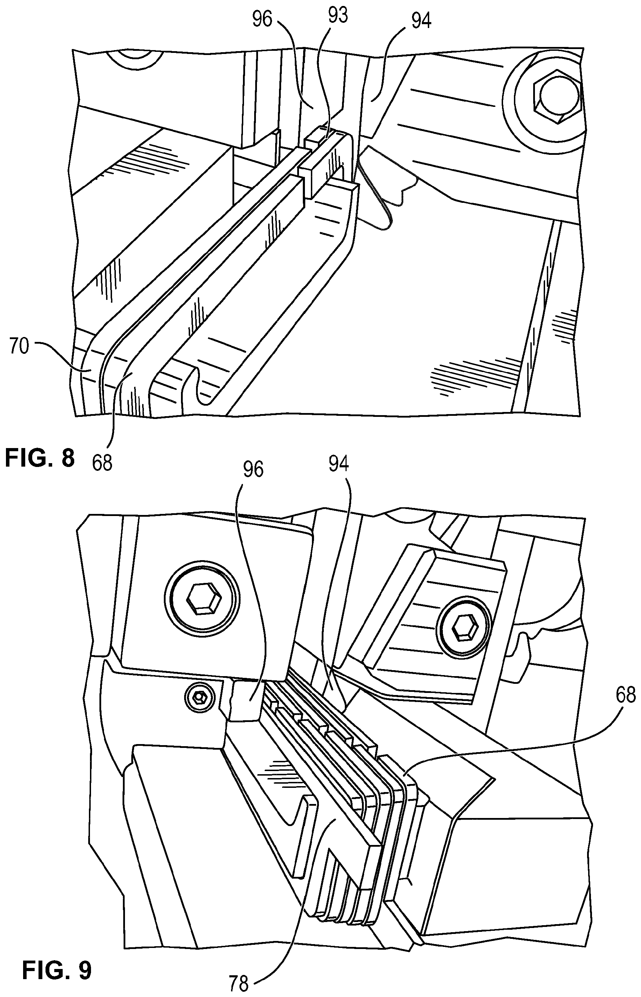

In einem zweiten Arbeitsschritt 92 wird die zweite Windung 70 in einer Axialrichtung A auf die erste Windung 68 gestapelt, wobei die jeweils in einer Radialrichtung R, also senkrecht zur Axialrichtung A, innenliegenden Aussparungen miteinander fluchten. Im Anschluss hieran werden die beiden Windungen 68, 70 unter Ausbildung einer ersten Kontaktstelle 93 mittels Widerstandshartlöten unter Zuhilfenahme von Lot direkt elektrisch miteinander kontaktiert. Hierbei liegt, wie in Fig. 8 gezeigt, eine erste Elektrode 94 an der ersten Windung 68 und eine zweite Elektrode 96 an der zweiten Windung 70 an. Mit anderen Worten ist die erste Windung 68 mit der ersten Elektrode 94 und die zweite Windung 70 mit der zweiten Elektrode 96 elektrisch kontaktiert. Mittels Anliegen einer elektrischen Spannung zwischen den beiden Elektroden 94, 96 und aufgrund des hieraus resultierenden Stromflusses wird das Lot aufgeschmolzen, und die beiden Windungen 68, 70 werden mittels des Lotes miteinander verbunden. Hierbei ist aufgrund der Unisoliertheit der beiden Windungen 68, 70 auch ein Stromfluss über weitere Stellen außer der ersten Kontaktstelle 93 möglich. Um dies zu verhindern, werden die beiden Windungen 68, 70 mittels der beiden Elektroden 94, 96 im Bereich der ersten Kontaktstelle 93 aufeinander zugepresst. Die erste Kontaktstelle 93 befindet sich direkt benachbart zu dem Schlitz 80 der ersten Windung 68 sowie zu dem Schlitz 80 der zweiten Windung 70.

In einem sich anschließenden dritten Arbeitsschritt 98 wird die dritte Windung 72 in Axialrichtung A auf die zweite Windung 70 gestapelt, sodass die zweite Windung 70 in Axialrichtung A zwischen der ersten Windung 68 und der dritten Windung 72 angeordnet ist. Nach Positionierung der dritten Windung 72 wird diese mittels Widerstandshartlöten unter Ausbildung einer zweiten Kontaktstelle 100 mit der zweiten Windung 70 elektrisch kontaktiert. Hierbei liegt die zweite Windung 70 mit Ausnahme eines etwaigen Lots im Bereich der zweiten Kontaktstellt 100 mechanisch direkt an der dritten Windung 72 an und ist somit elektrisch direkt mit dieser kontaktiert. Die zweite Kontaktstelle 100 ist bezüglich der ersten Kontaktstelle 93 senkrecht zur Axialrichtung A versetzt, wobei die zweite Kontaktstelle 100 benachbart zu dem Schlitz 80 der zweiten Windung 70 sowie zu dem Schlitz 80 der dritten Windung 72 ist. Zur Herstellung der zweiten Kontaktstelle 100 ist die erste Elektrode 94 elektrisch mit der ersten Windung 68 und die dritte Windung 72 mit der zweiten Elektrode 96 elektrisch kontaktiert. Hierbei liegt die erste Elektrode 94 mechanisch direkt an der ersten Windung 98 und die zweite Elektrode 96 mechanisch direkt an der dritten Windung 72 an. Infolgedessen wird lediglich auf die beiden außenliegenden Windungen 68, 72 mittels der Elektroden 94, 96 Wärme aufgebracht, weswegen die erste Kontaktstelle 93 nicht erneut geöffnet wird. Im Anschluss hieran werden die weiteren Windungen 74, 76, 78 sukzessive in Axialrichtung A aufeinander gestapelt und mittels der beiden Elektroden 94, 96 elektrisch mit der jeweils vorhergehenden Windung elektrisch kontaktiert, so dass das in Fig. 9 gezeigte Paket erstellt wird. Mittels der auf diese Weise erstellten Kontaktstellen ist eine Stufenform erstellt.

In einem sich anschließenden vierten Arbeitsschritt 102 wird zwischen die erste Windung 68 und die zweite Windung 70 die erste Isolationsschicht 84 und zwischen die zweite Windung 70 und die dritte Windung 72 die zweite Isolationsschicht 86 eingebracht. Auch zwischen die weiteren Windungen werden weitere Isolationsschichten eingebracht, die die jeweils benachbarten Windungen 68, 70, 72, 74, 76, 78 mit Ausnahme der jeweiligen Kontaktstellen 93, 100 gegeneinander elektrisch isolieren. Infolgedessen ist ein Stromfluss zwischen den einzelnen Windungen 68, 70, 72, 74, 76, 78 lediglich über die jeweiligen Kontaktstellen 93, 100 möglich. Die beiden Isolationsschichten 84, 86 stehen hierbei in Radialrichtung R bezüglich der ersten Windung 68, der zweiten Windung 70 und der dritten Windung 72 sowohl außen- als auch innenseitig über. Auch die weiteren, nicht gezeigten Isolationsschichten stehen in Radialrichtung R sowohl innen- als auch außenseitig über die jeweils benachbarten Windungen 72, 74, 76, 78 über. Der Überstand der Isolationsschichten 84, 86 ist beispielsweise auf der Seite der Anschlüsse 82, 83 und auf der hierzu gegenüberliegenden Seite vergrößert. Die Isolationsschichten selbst sind mittels Stanzen oder eines Schneidplotters aus einer großen Lage Isolationsmaterials erstellt. Ferner werden die elektrisch miteinander kontaktierten Windungen 68, 70, 72, 74, 76, 78 sowie die dazwischen angeordneten Isolationsschichten 84, 86 mit einer Beschichtung 104 versehen. Die Beschichtung 104 wird mittels Tauchen aufgetragen. Mit anderen Worten ist die Beschichtung 104 eine Tauschbeschichtung und besteht aus einem Lack.

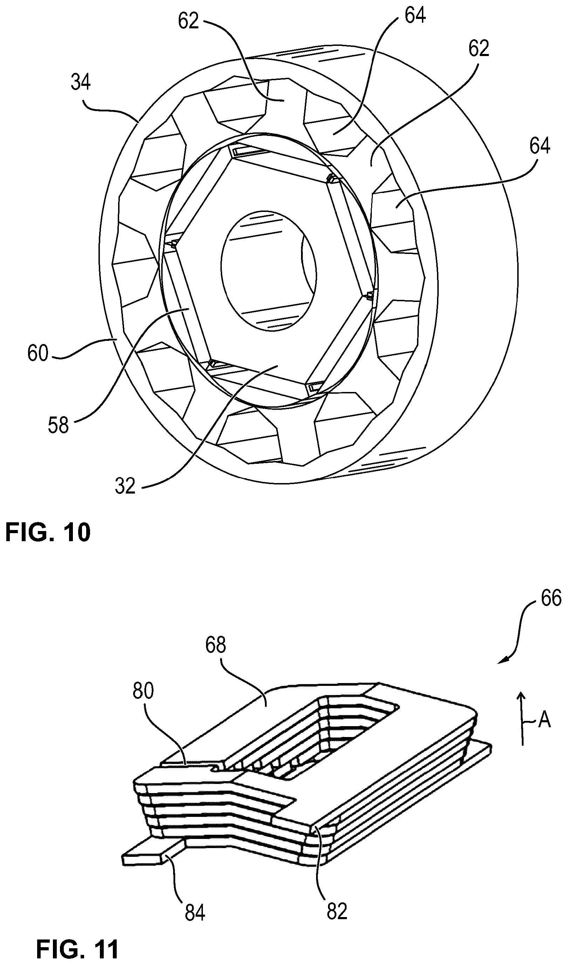

Sofern der Fig. 10 gezeigte Stator 34 mit dem Statorblechpaket 60, das lediglich neun Zähne 62 und somit lediglich neun Nuten 64 aufweist, verwendet wird, wird ein fünfter Arbeitsschritt 106 ausgeführt, bei dem die elektrisch miteinander kontaktierten Windungen 68, 70, 72, 74, 76, 78 in einer Richtung senkrecht zur Axialrichtung A gebogen werden, so dass der Querschnitt der elektrischen Wicklung 66 im Wesentlichen V-förmig ist. Hierbei verläuft die Biegeachse senkrecht zur Axialrichtung A und parallel zu der Richtung, zu der die Schlitze 80 sowie die Kontaktstellen 93, 100 zueinander beabstandet sind. Aufgrund der Biegung ist eine Sehnung der elektrischen Wicklung 66 reduziert, weswegen auch bei der verkleinerten Anzahl an Zähnen 62 der Rotor 32 des Elektromotors 30 des vorhergehenden Ausführungsbeispiels verwendet werden kann.

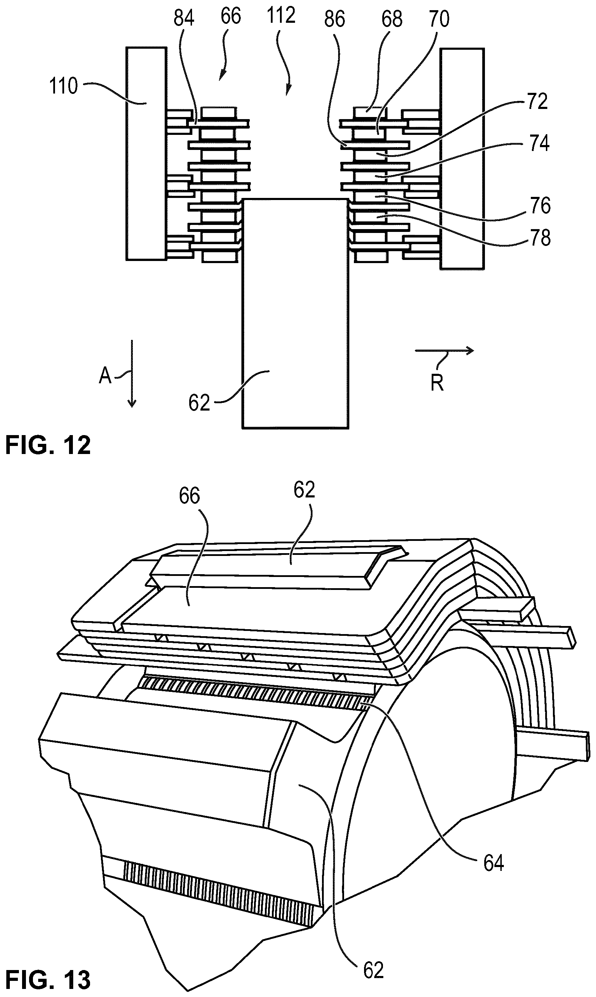

Sofern die elektrische Wicklung 66 auf dem Zahn 62 montiert werden soll, wird ein sechster Arbeitsschritt 108 ausgeführt. Hierbei werden mittels eines Greifers 110 die Isolationsschichten 84, 86 an dem über den Windungen 68, 70, 72, 74, 76, 78 in Radialrichtung R außen überstehenden Ende gegriffen, wie dies in Fig. 12 in einer Schnittdarstellung entlang der Axialrichtung A schematisch vereinfacht mit einer abgewandelten elektrischen Spule 66 gezeigt ist. Die zwischen den Windungen gebildete Öffnung 112 wird oberhalb des Zahnes 62 positioniert und die Windung 66 auf diesen aufgesetzt. Mittels des Greifers 110 wird die elektrische Wicklung 66 in Axialrichtung A auf den Zahn 62 aufgezogen. Hierbei werden die in Radialrichtung R innenliegenden Überstände der Isolationsschichten 84, 86 umgebogen, so dass mittels dieser ein Toleranzausgleich zwischen den Windungen 68, 70. 72, 74, 76, 78 und dem Zahn 62 geschaffen ist. Zudem sind die Windungen 68, 72, 74, 76, 78 mittels der umgebogenen Teile der Isolationsschichten 84, 86 elektrisch gegen den Zahn 62 isoliert. Der vollständige Montagezustand ist in Fig. 13 gezeigt. Da die Windungen 68, 70, 72, 74, 76, 78 Flachleiter sind, können diese vergleichsweise frei geformt werden, weswegen ein Füllgrad der Nuten 64 reduziert ist. Auch ist eine Stromtragfähigkeit der elektrischen Wicklung 66 aufgrund des vergleichsweise großen Querschnitts der Windungen 68, 70, 72, 74, 76, 78 erhöht. Aufgrund des Überstehens der Isolationsschichten 85, 86 ist eine Handhabbarkeit einerseits verbessert und andererseits ein stabiles Aufsitzen sowie eine elektrische Isolierung gegenüber dem (Stator-)Zahn 62 ermöglicht.

Zusammenfassend werden die Windungen 68, 70, 72, 76, 78 mittels Widerstandshartlötens sukzessive aneinander befestigt und elektrisch kontaktiert, wobei die einzelnen Windungen 68, 70, 72, 76, 78 aus der blanken, nicht isolierten Metallplatte erstellt sind und lediglich erst in dem vierten Arbeitsschritt 102 die elektrische Isolierung erhalten. Mittels der Elektroden 94, 96 wird beim Widerstandshartlötprozess lediglich die Wärme in die jeweils oberste Windung 68, 70, 72, 76, 78 eingebracht. Die Isolationsschichten 84, 86 stehen in Radialrichtung R über und sind beispielsweise mittels eines Schneidplotters geschnitten. Aufgrund des radialen Überstandes ist es erleichtert, diese zwischen den einzelnen Windungen 68, 70, 72, 76, 78 zu positionieren. Hierfür werden die einzelnen Windungen 68, 70, 72, 74, 76, 78 vorzugsweise auseinandergezogen, wofür ein entsprechendes Werkzeug beispielsweise an den Anschlüssen 82, 84 eingreift. Die einzelnen Windungen 68, 70, 72, 74, 76, 78 sind stets aufgrund der Kontaktstellen 93, 100 miteinander verbunden. Aufgrund der Biegung senkrecht zur Axialrichtung A, wie in Fig. 11 gezeigt, können auch Statoren 34 mit einer vergleichsweise geringen Anzahl an Zähnen 62 verwendet werden, wobei der Rotor 32 einen vergleichsweise großen Durchmesser aufweist. Insbesondere wird der Elektromotor 30 mit 48V betrieben. Aufgrund der Beschichtung 104 ist ein Kurzschluss zwischen den einzelnen Windungen 68, 70, 72,74, 76, 78 vermieden. Auch können die elektrischen Wicklungen 66 dem Kältemittel 10 ausgesetzt werden, ohne dass eine Korrosion der einzelnen Windungen 68, 70, 72, 74, 76, 78 erfolgt.

Die Erfindung ist nicht auf die vorstehend beschriebenen Ausführungsbeispiele beschränkt. Vielmehr können auch andere Varianten der Erfindung hieraus abgeleitet werden, ohne den durch die beigefügten Ansprüche definierten Gegenstand der Erfindung zu verlassen.

### Bezugszeichenliste

- 2: Kraftfahrzeug
- 4: Vorderrad
- 6: Hinterrad
- 8: Kältemittelkreislauf
- 10: Kältemittel
- 12: elektromotorischer Kältemittelverdichter
- 14: Kondensator
- 16: Verdampfer
- 18: Bus-System
- 20: Kraftfahrzeugsteuerung
- 22: Bordnetz
- 24: Batterie
- 26: Sicherungseinrichtung
- 28: Drehachse
- 30: Elektromotor
- 32: Rotor
- 34: Stator
- 36: Welle
- 38: Verdichterkopf
- 40: Elektronik
- 42: Gehäuse
- 44: Zulauf
- 46: Ablauf
- 48: Trennwand
- 50: Elektronikgehäuse
- 52: Durchkontaktierung
- 54: Gehäusedeckel
- 56: Rotorblechpaket
- 58: Permanentmagnet
- 60: Statorblechpaket
- 62: Zahn
- 64: Nut
- 66: elektrische Wicklung
- 68: erste Windung
- 70: zweite Windung
- 72: dritte Windung
- 74: vierte Windung
- 76: fünfte Windung
- 78: sechste Windung
- 80: Schlitz
- 82: Anschluss
- 83: weiterer Anschluss
- 84: erste Isolationsschicht
- 86: zweite Isolationsschicht
- 88: Verfahren
- 90: erster Arbeitsschritt
- 92: zweiter Arbeitsschritt
- 93: erste Kontaktstelle
- 94: erste Elektrode
- 96: zweite Elektrode
- 98: dritter Arbeitsschritt
- 100: zweite Kontaktstelle
- 102: vierter Arbeitsschritt
- 104: Beschichtung
- 106: fünfter Arbeitsschritt
- 108: sechster Arbeitsschritt
- 110: Greifer
- 112: Öffnung

- A: Axialrichtung
- R: Radialrichtung

## Patentansprüche

1. Verfahren (88) zur Herstellung einer elektrischen Wicklung (66) einer elektrischen Maschine (30) eines Kraftfahrzeugs (2), insbesondere eines elektromotorischen Kältemittelverdichters (12), bei dem
- eine erste und eine zweite Windung (68, 70) in einer Axialrichtung (A), die parallel zu einer Achse der elektrischen Wicklung (66) ist, übereinander gestapelt und unter Ausbildung einer ersten Kontaktstelle (93) stoffschlüssig mittels eines Kontaktmaterials elektrisch miteinander kontaktiert werden,
- eine dritte Windung (72) in der Axialrichtung (A) auf die zweite Windung (70) gestapelt und unter Ausbildung einer zweiten Kontaktstelle (100) stoffschlüssig mittels eines Kontaktmaterials mit der zweiten Windung (70) elektrisch kontaktiert wird,
- ein Kontaktmaterial herangezogen wird, dessen Schmelztemperatur kleiner als die Schmelztemperatur der ersten, zweiten und dritten Windung (68, 70, 72) ist, und
- zwischen die erste Windung (68) und die zweite Windung (70) eine erste Isolationsschicht (84) und zwischen die zweite Windung (70) und die dritte Windung (72) eine zweite Isolationsschicht (86) eingebracht wird,
- wobei die erste Windung (68), die zweite Windung (70) und die dritte Windung (72) aus einer elektrisch unisolierten Metallplatte erstellt werden,
- wobei die Isolationsschichten (84, 86) zwischen die Windungen (68, 70, 72) nach Erstellung der elektrischen Kontaktierung eingebracht werden,
- wobei die erste Isolationsschicht (84) und die zweite Isolationsschicht (86) derart gewählt werden, dass diese in einer Radialrichtung (R), die senkrecht zur Axialrichtung (A) ist, über die erste Windung (68), die zweite Windung (70) und die dritte Windung (72) überstehen,
- wobei die Isolationsschichten (84, 86) an zumindest einer der jeweils zugeordneten Windungen (68, 70, 72) mittels Klebens befestigt werden,
und
- wobei die elektrisch miteinander kontaktierten Windungen (68, 70, 72) mittels einer Beschichtung (104) versehen werden.

2. Verfahren (88) nach Anspruch 1,
**dadurch gekennzeichnet,**
**dass** die erste Windung (68), die zweite Windung (70) und die dritte Windung (72) aus einer elektrisch unisolierten Metallplatte gestanzt werden.

3. Verfahren (88) nach Anspruch 1 oder 2,
**dadurch gekennzeichnet,**
**dass** die elektrisch miteinander kontaktierten Windungen (68, 70, 72) in einer Richtung senkrecht zur Axialrichtung (A) gebogen werden.

4. Verfahren (88) nach einem der Ansprüche 1 bis 3,
**dadurch gekennzeichnet,**
**dass** die elektrische Kontaktierung mittels Widerstandshartlöten erfolgt.

5. Elektrische Wicklung (66) einer elektrischen Maschine (30) eines Kraftfahrzeugs (2), insbesondere eines elektromotorischen Kältemittelverdichters (12), die gemäß einem Verfahren (88) nach einem der Ansprüche 1 bis 4 hergestellt ist.

6. Elektrische Wicklung (66) nach Anspruch 5,
**dadurch gekennzeichnet,**
**dass** die erste Kontaktstelle (93) und die zweite Kontaktstelle (100) zueinander senkrecht zur Axialrichtung (A) versetzt sind.

7. Elektrische Wicklung (66) nach Anspruch 5 oder 6,
**dadurch gekennzeichnet,**
**dass** an der ersten Windung (68) ein Anschluss (82) angeformt ist.

8. Elektrische Wicklung (66) nach einem der Ansprüche 5 bis 7,
**dadurch gekennzeichnet,**
**dass** jede Windung (68, 70, 72) ein Ring mit einem Schlitz (80) ist, wobei der Schlitz (80) direkt benachbart zu der jeweiligen Kontaktstelle (93, 100) ist.

## Claims

1. Method (88) for producing an electric winding (66) of an electric machine (30) of a motor vehicle (2), in particular an electromotive refrigerant compressor (12), in which
- a first and a second turn (68, 70) are stacked one on top of the other in an axial direction (A), which is parallel to an axis of the electric winding (66), and are electrically in contact with each other by integral bonding by means of a contact material, forming a first contact point (93),
- a third turn (72) is stacked in the axial direction (A) on the second turn (70) and is electrically in contact with the second turn (70) by integral bonding by means of a contact material, forming a second contact point (100),
- use is made of a contact material, the melting point of which is lower than the melting point of the first, second and third turns (68, 70, 72), and
- a first insulation layer (84) is introduced between the first turn (68) and the second turn (70), and a second insulation layer (86) is introduced between the second turn (70) and the third turn (72),
- wherein the first turn (68), the second turn (70) and the third turn (72) are made from an electrically uninsulated metal plate,
- wherein the insulation layers (84, 86) are introduced between the turns (68, 70, 72) after the electric contact has been made,
- wherein the first insulation layer (84) and the second insulation layer (86) are selected in such a way that they protrude over the first turn (68), the second turn (70) and the third turn (72) in a radial direction (R), which is perpendicular to the axial direction (A),
- wherein the insulation layers (84, 86) are fastened to at least one of the respectively associated turns (68, 70, 72) by means of adhesive bonding, and
- wherein the turns (68, 70, 72), which are electrically in contact with one another, are provided by means of a coating (104).

2. Method (88) according to Claim 1,
**characterized**
**in that** the first turn (68), the second turn (70) and the third turn (72) are punched from an electrically uninsulated metal plate.

3. Method (88) according to Claim 1 or 2,
**characterized**
**in that** the turns (68, 70, 72), which are electrically in contact with one another, are bent in a direction perpendicular to the axial direction (A).

4. Method (88) according to any one of Claims 1 to 3,
**characterized**
**in that** the electric contact is made by means of resistance brazing.

5. Electric winding (66) of an electric machine (30) of a motor vehicle (2), in particular an electromotive refrigerant compressor (12), which is produced according to a method (88) according to any one of Claims 1 to 4.

6. Electric winding (66) according to Claim 5,
**characterized**
**in that** the first contact point (93) and the second contact point (100) are offset from each other perpendicular to the axial direction (A).

7. Electric winding (66) according to Claim 5 or 6,
**characterized**
**in that** a connection (82) is integrally formed on the first turn (68).

8. Electric winding (66) according to any one of Claims 5 to 7,
**characterized**
**in that** each turn (68, 70, 72) is a ring with a slot (80), the slot (80) being directly adjacent to the respective contact point (93, 100).

## Revendications

1. Procédé (88) de réalisation d'un enroulement (66) électrique d'une machine électrique (30) d'un véhicule à moteur (2), en particulier d'un compresseur frigorifique à moteur électrique (12), dans lequel
- un premier et un deuxième enroulement (68, 70) sont empilés l'un au-dessus de l'autre dans une direction axiale (A), qui est parallèle à un axe de l'enroulement (66) électrique, et sont mis en contact électrique l'un avec l'autre par liaison de matière au moyen d'un matériau de contact tout en formant un premier point de contact (93),
- un troisième enroulement (72) est empilé sur le deuxième enroulement (70) dans la direction axiale (A) et est mis en contact électrique avec le deuxième enroulement (70) par liaison de matière au moyen d'un matériau de contact tout en formant un deuxième point de contact (100),
- un matériau de contact dont la température de fusion est inférieure à la température de fusion du premier, deuxième et troisième enroulement (68, 70, 72) est employé, et
- une première couche isolante (84) est introduite entre le premier enroulement (68) et le deuxième enroulement (70) et une deuxième couche isolante (86) est introduite entre le deuxième enroulement (70) et le troisième enroulement (72),
- le premier enroulement (68), le deuxième enroulement (70) et le troisième enroulement (72) étant créés à partir d'une plaque métallique non isolée électriquement,
- les couches isolantes (84, 86) étant introduites entre les enroulements (68, 70, 72) après la mise en contact électrique,
- la première couche isolante (84) et la deuxième couche isolante (86) étant choisies de telle manière qu'elles dépassent du premier enroulement (68), du deuxième enroulement (70) et du troisième enroulement (72) dans une direction radiale (R), qui est perpendiculaire à la direction axiale (A),
- les couches isolantes (84, 86) étant fixées par collage sur au moins un des enroulements (68, 70, 72) respectivement associés, et
- les enroulements (68, 70, 72) en contact électrique entre eux étant réalisés au moyen d'un revêtement (104).

2. Procédé (88) selon la revendication 1,
**caractérisé en ce**
**que** le premier enroulement (68), le deuxième enroulement (70) et le troisième enroulement (72) sont estampés à partir d'une plaque métallique non isolée électriquement.

3. Procédé (88) selon la revendication 1 ou 2,
**caractérisé en ce**
**que** les enroulements (68, 70, 72) en contact électrique les uns avec les autres sont cintrés dans une direction perpendiculaire à la direction axiale (A).

4. Procédé (88) selon l'une des revendications 1 à 3,
**caractérisé en ce**
**que** la mise en contact électrique est effectuée par brasage fort par résistance.

5. Enroulement (66) électrique d'une machine électrique (30) d'un véhicule à moteur (2), en particulier d'un compresseur frigorifique à moteur électrique (12), qui est fabriqué selon un procédé (88) selon l'une des revendications 1 à 4.

6. Enroulement (66) électrique selon la revendication 5,
**caractérisé en ce**
**que** le premier point de contact (93) et le deuxième point de contact (100) sont décalés l'un par rapport à l'autre perpendiculairement à la direction axiale (A).

7. Enroulement (66) électrique selon la revendication 5 ou 6,
**caractérisé en ce**
**qu'**une connexion (82) est formée sur le premier enroulement (68).

8. Enroulement (66) électrique selon l'une des revendications 5 à 7,
**caractérisé en ce**
**que** chaque enroulement (68, 70, 72) est un anneau présentant une entaille (80), l'entaille (80) étant directement adjacente au point de contact (93, 100) respectif.
